# EUROPEAN PATENT SPECIFICATION

(11) **EP 3 067 321 B1**
(45) Date of publication and mention of the grant of the patent: **19.04.2017**
(21) Application number: 16158684.7
(22) Date of filing: 04.03.2016
(51) Int. Cl.: C01G 33/00, H01M 4/04

(54) **ACTIVE MATERIAL, NONAQUEOUS ELECTROLYTE BATTERY, BATTERY PACK, AND BATTERY MODULE**
AKTIVMATERIAL, BATTERIE MIT NICHTWÄSSRIGEM ELEKTROLYTEN, BATTERIEPACK UND BATTERIEMODUL
MATÉRIAU ACTIF, BATTERIE ÉLECTROLYTIQUE NON AQUEUSE, ENSEMBLE DE BATTERIES ET MODULE DE BATTERIE

(30) Priority: 13.03.2015 JP 2015050998
(43) Date of publication of application: 14.09.2016
(73) Proprietor: Kabushiki Kaisha Toshiba, Tokyo 105-8001 (JP)
(72) Inventor: Inagaki, Hiroki, Tokyo, 105-8001 (JP); Ise, Kazuki, Tokyo, 105-8001 (JP); Harada, Yasuhiro, Tokyo, 105-8001 (JP); Takami, Norio, Tokyo, 105-8001 (JP)
(74) Representative: Hoffmann Eitle

(56) References cited:
- WO-A2-2012/016185
- CN-A- 101 172 654
- SHINNOSUKE NOGUCHI ET AL: "Nitrification of Nb-Modified Titanias Prepared by the Solvothermal Method and their Photocatalytic Activities under Visible-Light Irradiation", KEY ENGINEERING MATERIALS, vol. 596, 13 December 2013 (2013-12-13), pages 43-49, XP055271648, DOI: 10.4028/www.scientific.net/KEM.596.43

## Description

### FIELD

Embodiments described herein relate generally to an active material, a nonaqueous electrolyte battery, a battery pack and a battery module.

### BACKGROUND

Recently, a nonaqueous electrolyte battery such as lithium ion secondary battery has been developed as a battery having a high energy density. The nonaqueous electrolyte battery is expected to be a power source for hybrid vehicles or electric cars. The nonaqueous electrolyte battery is also expected as an uninterruptible power supply for base stations for portable telephone. For that reason, it is required for the nonaqueous electrolyte battery to have, in addition to a high energy density, other properties such as a quick charge-and-discharge characteristic and long term reliability. Nonaqueous electrolyte battery enabling quick charge-and-discharge has an advantage of a remarkably reduced charging time. In addition, the nonaqueous electrolyte battery enabling quick charge-and-discharge can improve performances related to motivity of hybrid vehicles and efficiently recover regenerative energy from motivity.

Quick charge-and-discharge can be realized by quick movement of electrons and lithium ions between a positive electrode and a negative electrode. In a battery using a carbon-based negative electrode, however, if the quick charge-and-discharge is repeated, dendrite precipitation of metal lithium may occur on the electrode. The dendrites may cause an internal short-circuit, and as a result, heat may be generated or ignition may occur.

In light of this, a battery using a metal composite oxide instead of a carbonaceous material as the negative electrode active material, has been developed. Particularly, in a battery using a titanium oxide as the negative electrode active material, quick charge-and-discharge can be stably perfomed, and such a battery also has a longer life property than that of a battery using carbon-based negative electrode.

Titanium oxide, however, has a higher potential based on metal lithium than that of a carbonaceous material, i.e., titanium oxide is nobler. In addition, titanium oxide has a low capacity per unit weight. For those reasons, a battery using titanium oxide has a disadvantage of a low energy density.

For example, the potential of the electrode using titanium oxide is about 1.5 V based on the metal lithium, and thus is higher (nobler) than the potential of the carbon-based negative electrode. The potential of titanium oxide is caused by an oxidation-reduction reaction between Ti³⁺ and Ti⁴⁺ when lithium is electrochemically inserted and extracted, and thus it is electrochemically restricted. In addition, there is a fact that the quick charge-and-discharge of lithium can be stably performed at a high electrode potential of about 1.5 V. It is therefore substantially difficult to drop the electrode potential to improve the energy density.

With respect to the capacity per unit weight, a lithium-titanium composite oxide such as Li₄Ti₅O₁₂ has a theoretical capacity of about 175 mAh/g. On the other hand, a material generally used for a graphite-based electrode has a theoretical capacity of 372 mAh/g. The capacity density of titanium oxide is, accordingly, remarkably lower than that of a carbon-based negative electrode. This is caused by the fact that there are only a few sites capable of inserting lithium in the crystal structure of the titanium oxide, and lithium is easily stabilized in the structure, resulting in a reduction in the substantial capacity.

In view of the above, a new electrode material containing Ti and Nb has been studied. Such a material is expected to have a high charge-and-discharge capacity. In particular, a composite oxide, represented by TiNb₂O₇, has a high theoretical capacity of more than 300 mAh/g. Such a material, however, is an insulator, and has defects of low electron conductivity and poor large-current characteristic.

### BRIEF DESCRIPTION OF THE DRAWINGS

FIG. 1 is a schematic diagram showing a crystal structure of a titanium-niobium composite oxide (TiNb₂O₇);
FIG. 2 is a schematic diagram showing the crystal structure of FIG. 1 from another direction;
FIG. 3 is a cross-sectional view showing a nonaqueous electrolyte battery of one example according to a second embodiment;
FIG. 4 is an enlarged cross-sectional view showing A part in FIG. 3;
FIG. 5 is an exploded perspective view showing a battery pack of one example according to a third embodiment; and
FIG. 6 is a block diagram showing an electric circuit of the battery pack shown in FIG. 5.

### DETAILED DESCRIPTION

In general, according to one embodiment, there is provided an active material for a battery. The active material for a battery contains a a niobium composite oxide. The niobium composite oxide is represented by a general formula of LiₓM_{(1-y)}Nb_{y}Nb₂O_{(7+δ)}. In the general formula, M is at least one selected from the group consisting of Ti and Zr, and x, y and δ satisfy 0 ≤ x ≤ 6, 0 ≤ y ≤ 1, and -1 ≤ δ ≤ 1, respectively. The niobium composite oxide contains nitrogen atoms in a content of 0.01% to 3.02% by mass.

The embodiments will be explained below with reference to the drawings. In this case, the structures common to all embodiments are represented by the same symbols and duplicated explanations will be omitted. Also, each drawing is a typical view for explaining the embodiments and for promoting an understanding of the embodiments. Though there are parts different from an actual device in shape, dimension and ratio, these structural designs may be properly changed taking the following explanations and known technologies into consideration.

### (First Embodiment)

According to a first embodiment, there is provided an active material for a battery. The active material for a battery contains a a niobium composite oxide. The niobium composite oxide is represented by a general formula of LiₓM_{(1-y)}Nb_{y}Nb₂O_{(7+δ)}. In the general formula, M is at least one selected from the group consisting of Ti and Zr, and x, y and δ satisfy 0 ≤ x ≤ 6, 0 ≤ y ≤ 1, and -1 ≤ δ ≤ 1, respectively. The niobium composite oxide contains nitrogen atoms in a content of 0.01% to 3.02% by mass.

First, a niobium composite oxide, represented by the general formula of LiₓM_{(1-y)}Nb_{y}Nb₂O_{(7+δ)} wherein M is at least one selected from the group consisting of Ti and Zr; and x, y and 5 satisfy 0 ≤ x ≤ 6, 0 ≤ y ≤ 1, and -1 ≤ δ ≤ 1, respectively, can realize a nonaqueous electrolyte battery capable of exhibiting a high energy density, i.e., a high capacity. The reason for the above is explained with reference to, as an example, titanium-niobium composite oxide TiNb₂O₇, which is an example of the niobium composite oxide.

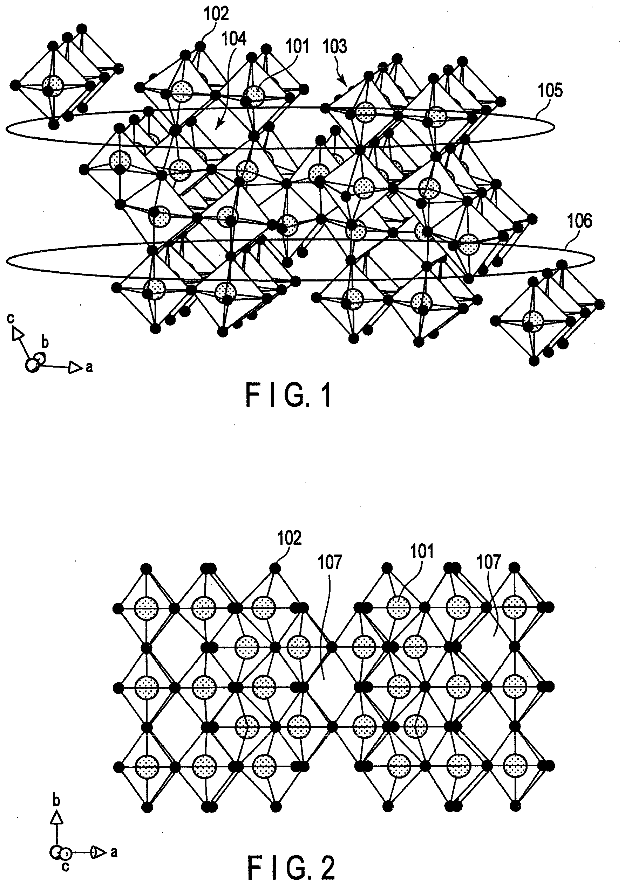

First, an example of a crystal structure of the niobium composite oxide is explained with reference to FIGS. 1 and 2.

FIG. 1 is a schematic diagram showing a crystal structure of a titanium-niobium composite oxide (TiNb₂O₇). FIG. 2 is a schematic diagram showing the crystal structure in FIG. 1 from another direction.

As shown in FIG. 1, in the crystal structure of the titanium-niobium composite oxide (TiNb₂O₇), which is an example of the monoclinic niobium composite, metal ions 101 and oxide ions 102 form backbone structure parts 103. In sites of the metal ions 101, Nb ions and Ti ions are randomly disposed in an Nb : Ti ratio of 2 : 1. The backbone structure parts 103 are three-dimensionally alternately disposed to form voids 104 among the backbone structure parts 103. This void 104 is a host for a lithium ion. The voids 104 can occupy a large space in the whole crystal structure, as shown in FIG. 1. In addition, the voids 104 are structurally stable.

In the crystal structure above, when the lithium ions are inserted in the voids 104, the metal ions 101 forming the backbone are reduced to a trivalent state, whereby the electrical neutrality of the crystal can be maintained. In a monoclinic oxide, represented by TiNb₂O₇, not only Ti ion is reduced from tetravalent to trivalent, but also Nb ion is reduced from pentavalent to trivalent. The monoclinic oxide represented by TiNb₂O₇, therefore, has a large reduction valence per active material weight. For that reason, in the monoclinic oxide represented by TiNb₂O₇, even if many lithium ions are inserted, the electrical neutrality of a crystal can be maintained. Therefore, the monoclinic oxide represented by TiNb₂O₇ has an energy density higher than that of a compound containing only tetravalent cations, such as titanium oxide. For example, the monoclinic oxide represented by TiNb₂O₇ has a theoretical capacity of about 387 mAh/g, which is a value twice or more a theoretical capacity of a titanium oxide having a spinel structure.

In FIG. 1, a region 105 and a region 106 are parts each having a two-dimensional channel in a [100] direction and a [010] direction. As shown in FIG. 2, in each region, the crystal structure of the monoclinic TiNb₂O₇ has voids 107 in a [001] direction. The void 107 has a tunnel structure advantageous for lithium ion conduction, and is an electrical conduction path connecting the region 105 to the region 106 in the [001] direction. The lithium ions can go and return between the region 105 and the region 106 through the conduction path.

In this way, the crystal structure of the monoclinic TiNb₂O₇ has a large space into which lithium ions can be quivalently inserted, and has structural stability. Furthermore, the structure includes regions having two-dimensional channels in which the lithium ion diffuses rapidly and the [001] direction conduction path connecting them. Thus, in the crystal structure of the monoclinic TiNb₂O₇, the insertion properties of the lithium ions to the insertion space and the extraction properties of the lithium ions from the insertion space are improved, and the insertion and extraction space for the lithium ions is effectively increased.

The monoclinic oxide represented by the composition formula of TiNb₂O₇ has a lithium-insertion potential of about 1.5 V (vs. Li/Li⁺).

Due to the reasons explained above, when the niobium composite oxide represented by the composition formula of TiNb₂O₇ is used as the active material, a battery which exhibits an excellent rate performance, can stably and repeateadly perform quick charge-and-discharge, and has a high energy density can be provided.

A zirconium-niobium composite oxide represented by a general formula of Zr_{(1-y)}Nb_{y}Nb₂O_{(7+δ)}, such as a compound represented by ZrNb₂O₇, also has a crystal structure similar to that of the titanium-niobium composite oxide represented by TiNb₂O₇, and exhibits a lithium-insertion potential of about 1.5 V (vs. Li/Li⁺). Therefore, when the oxide represented by ZrNb₂O₇ is used as the active material, a battery which exhibits an excellent rate performance, can stably and repeatedly perform quick charge-and-discharge, and has a high energy density can be provided, similarly to the niobium composite oxide represented by TiNb₂O₇.

In the niobium composite oxide, a part of the metal element M (Ti and/or Zr) sites in the crystal structure may be substituted by the Nb element. The subscript y in the general formula of LiₓM_{(1-y)}Nb_{y}Nb₂O_{(7+δ)} indicates a part which is substituted by the Nb element among metal element M sites in the crystal structure. The valence of the metal element sites in the niobium composite oxide varies depending on the substitution state of the metal element M by the Nb element, and thus in the general formula, the number of oxygen atoms can be a value between 6 and 8.

The present inventors have found, through much research, that the niobium composite oxide exemplified by the composition formula of TiNb₂O₇ described above is an insulator, and has a poor electron conductivity. If such an oxide is used as an active material for a battery as-is without taking any measures, the obtained battery has a poor large-current performance and a short life. In order to solve the problems described above, it is effective, for example, to coat the surface thereof with carbon, which has high conductivity.

When the niobium composite oxide coated with the carbon is used as the active material in the nonaqueous electrolyte battery, however, the coated carbon reacts with the electrolytic solution to generate gas, thus resulting in a swollen battery in a high temperature environment, and the capacity may likely be reduced. In addition, the surface of fine particles of the active material may also likely be reduced by the heat-treatment when the carbon is coated, resulting the generation of a heterogeneous phase, and the electric capacity may be reduced.

As a result of much research conducted by the present inventors in view of the problems described above, they have realised the active material for a battery according to the first embodiment. The present inventors, accordingly, have found that when nitrogen atoms are doped in the niobium composite oxide in an amount of 0.01% to 3.02% by mass, conductivity can be imparted to the niobium composite oxide itself without reducing the electric capacity of the composite oxide. The present inventors have also found that in not only the titanium-niobium composite oxide TiNb₂O₇ but also the zirconium-niobium composite oxide ZrNb₂O₇ and niobium composite oxide in which a part of Ti and/or Zr sites has been substituted by Nb element, each of which is the niobium composite oxide represented by the general formula of LiₓM_{(1-y)}Nb_{y}Nb₂O_{(7+δ)} (wherein M is at least one selected from the group consisting of Ti and Zr, and x, y and δ satisfy, respectively, 0 ≤ x ≤ 6, 0 ≤ y ≤ 1, and -1 ≤ δ ≤ 1), conductivity can be imparted to the niobium composite oxide itself by doping nitrogen atoms.

That is, the active material for a battery according to the first embodiment can exhibit improved conductivity by the doping of nitrogen atoms. Therefore, the active material for a battery according to the first embodiment can effectively form a good electron conducting path in the electrode, when it is used for the electrode in the nonaqueous electrolyte battery. As a result, the active material for a battery according to the first embodiment can realize a nonaqueous electrolyte battery whose large-current characteristic and cycle characteristic are improved without impairing the capacity and the rate characteristic.

Next, the active material for a battery according to the first embodiment is explained in more detail.

The lithium Li in the general formula of LiₓM_{(1-y)}Nb_{y}Nb₂O_{(7+δ)} can be inserted when the niobium composite oxide is used as the active material in the nonaqueous electrolyte battery; in other words, the niobium composite oxide, which is contained in the active material for a battery according to the first embodiment contained in the nonaqueous electrolyte battery which has been charged or discharged, can contain lithium. On the other hand, a niobium composite oxide which is contained in the active material for a battery according to the first embodiment before incorporation into a nonaqueous electrolyte battery or contained in a nonaqueous electrolyte battery which has not yet been charged or discharged may sometimes not contain lithium. Alternatively, the niobium composite oxide can also contain lithium by synthesis using a lithium-containing compound such as lithium carbonate as the starting material.

M in the general formula of LiₓM(_{1-y)}Nb_{y}Nb₂O_{(7+δ)} may be one of Ti and Zr, or both of Ti and Zr.

The active material for a battery has a nitrogen-atom content within a range of 0.01% by mass to 3.02% by mass to the mass of the niobium composite oxide. When the nitrogen-atom content is less than 0.01% by mass, sufficient electrical conductivity cannot be obtained. On the other hand, when the nitrogen-atom content is more than 3.02% by mass, a heterogeneous phase of the niobium composite oxide, which can cause a reduction of the electric capacity and a degradation of the charge-and-discharge cycle performance, may likely be generated. The preferable nitrogen-atom content is from 0.03% by mass to 1% by mass.

The active material for a battery according to the first embodiment may be substituted by a heteroelement in order to improve the performances, or may be contaminated with impurities inevitable from a production view point. The heteroelement, which is, for example, at least one element selected from Zr, Mo, W, V, Ta, P, Y, Al, Fe, and B, can be contained in an amount of 0.03% to 8.33% by atom, in the terms of the improvement of the rate characteristic and the life performance. One heteroelement can be contained, or two or more heteroelement can be contained. In addition, the active material for a battery according to the first embodiment may contain impurities inevitable from a production view point in an amount of 1000 mass ppm or less.

The active material for a battery according to the first embodiment is preferably in the state of a particle. It is preferable that, in the active material for a battery according to the first embodiment, the nitrogen atoms exist on the surface of the particle in a higher concentration than the inside of the particle. When the nitrogen atoms exist on the particle surface in a higher concentration, a battery can be provided in which a good electron conducting path can be effectively formed in the electrode, which can exhibit an excellent rate characteristic without impairing the energy density, and which can perform quick charging and discharging stably and repeatedly.

The niobium composite oxide represented by the general formula of LiₓM_{(1-y)}Nb_{y}Nb₂O_{(7+δ)} can have a crystal structure of a monoclinic oxide. It is more preferable that the niobium composite oxide has a symmetry of a space group C2/m or P12/m1. The niobium composite oxide may have a crystal structure having an atomic coordinate as described in the Journal of Solid State Chemistry 53, pp. 144-147 (1984). The type of symmetry of a space group may be one or more than one.

The active material for a battery according to the first embodiment may be a primary particle, or a secondary particle formed by aggregation of the primary particles.

In the active material for a battery according to the first embodiment, it is preferable that the primary particles or the primary particles forming the secondary particle have an average primary particle size of 1 nm to 10 µm. When the average primary particle size of the active material for a battery according to the first embodiment is within the range described above, the handling in industrial production is easy, and diffusion in solid for the lithium ions in a niobium composite oxide can be further promoted. The average primary particle size is more preferably from 10 nm to 1 µm.

The primary particle is preferably isotropic. The isotropic particle herein refers to a particle having an aspect ratio of 3 or less. Whether the primary particles are isotropic particles or not can be confirmed by observation with a scanning electron microscope (SEM).

When the active material for a battery according to the first embodiment is a secondary particle, an average secondary particle size is preferably from 1 µm to 100 µm. When the average particle size of the secondary particle is within the range described above, the active material for a battery according to the first embodiment can be easily handled in industrial production, the mass and the thickness of a coating film for fabricating an electrode can be made uniform, and reduction of the surface smoothness of the electrode can be prevented. The average particle size of the secondary particles is more preferably from 3 µm to 30 µm.

Whether or not the active material for a battery according to the first embodiment is in the state of a secondary particle can be confirmed, for example, by observation with a scanning electron microscope (SEM).

The active material for a battery according to the first embodiment has preferably a specific surface area, measured by a BET method, of 5 m²/g to 50 m²/g. When the specific surface area is 5 m²/g or more, it is possible to secure sufficient insertion-and-extraction sites for lithium ions. When the specific surface area is 50 m²/g or less, the handling in industrial production can be easy.

The active material for a battery according to the first embodiment can be used for either a negative electrode or positive electrode in a nonaqueous electrolyte battery. The active material for a battery according to the first embodiment can realized a nonaqueous electrolyte battery which can exhibit a high capacity, an excellent large-current characteristic and a cycle characteristic if regardless of whether the active material is applied to a negative electrode or a positive electrode.

When the active material for a battery according to the first embodiment is used for the positive electrode, as the active material of the negative electrode which is the counter electrode, for example, metal lithium, a lithium alloy, or a carbon material such as graphite or coke can be used.

When the active material for a battery according to the first embodiment is used as the negative electrode active material in the negative electrode, the material may be used alone, or used in combination with another active material. The other active material may include, for example, lithium-titanium composite oxides having a spinel structure (Li₄Ti₅O₁₂, and the like), titanium composite oxides having an anatase-type, rutile-type or monoclinic β-type structure (a-TiO₂, r-TiO₂, TiO₂(B), and the like), and iron composite sulfides (FeS, FeS₂, and the like).

Similarly, when the active material for a battery according to the first embodiment is used as the positive electrode active material in the positive electrode, the material may be used alone, or used in combination with another active material. The other active material may include, for example, lithium-titanium composite oxides having a spinel structure (Li₄Ti₅O₁₂, and the like), titanium composite oxides having an anatase-type, rutile-type or a monoclinic β-type structure (a-TiO₂, r-TiO₂, TiO₂(B), and the like), and iron composite sulfides (FeS, FeS₂, and the like).

The active material for a battery according to the first embodiment can be produced, for example, by a method described below.

One example of the production methods described here contains a step of obtaining a niobium composite oxide by a solid-phase reaction; a step of grinding a niobium composite oxide to obtain a ground product; and a step of subjecting the ground product to a heat-treatment at 400°C to 800°C in an ammonia stream.

First, for example, a niobium composite oxide is obtained by a solid-phase reaction, as described below. However, the method of obtaining the niobium composite oxide is not limited to methods using the solid-phase reaction. The method for producing the niobium composite oxide other than the method using the solid-phase reaction may include, for example, a sol-gel method, a hydrothermal method, and a coprecipitation method.

According to the method using the solid-phase reaction, first, starting materials are mixed to obtain a mixture. As the starting material, oxides or salts arbitrarily containing any of Ti, Nb and Zr may be used. For example, when TiNb₂O₇ is synthesized, an oxide such as titanium dioxide or niobium pentoxide may be used as the starting material. As the salt used as the starting material, salts capable of decomposing at a comparatively low temperature to produce an oxide, such as hydroxide salts, carbonates and nitrates, are preferable. Niobium hydroxide and zirconium hydroxide are suitable.

Next, the obtained mixture is ground to obtain a mixture as uniform as possible. Next, the obtained mixture is sintered. The sintering may be performed at a temperature range of 900°C to 1400°C for a total time of 1 to 100 hours.

The niobium composite oxide, represented by the general formula of LiₓM_{(1-y)}Nb_{y}Nb₂O_{(7+δ)}, can be obtained by the method described above.

In the niobium composite oxide described above, the lithium ion, which has been inserted by the charge of the battery, can remain as an irreversible capacity. Alternatively, the niobium composite oxide may be synthesized as a composite oxide containing lithium by using a compound containing lithium, such as lithium carbonate, as the starting material. Thus, the niobium composite oxide can contain the monoclinic oxide phase represented by the general formula of LiₓM_{(1-y)}Nb_{y}Nb₂O_{(7+δ)}.

Next, the niobium composite oxide is ground to obtain a ground product. In this step, the niobium composite oxide, obtained as above, is ground using a grinding aid, such as water, ethanol, methanol, diethylene glycol, polyethylene glycol, cyclohexane, 2-propanol, or 1-butanol, into fine particles.

Next, in the heat-treatment step in an atmosphere containing ammonia, nitrogen atoms are doped on the surface of the active material. The heat-treatment temperature is preferably from 400°C to 800°C. When the temperature is lower than 400°C, the reaction insufficiently advances, and it is difficult to increase the electron conductivity. On the other hand, when the heat-treatment temperature is higher than 800°C, the reaction of the active material with ammonia advances excessively, and a heterogeneous phase, which inhibits the charge and discharge, is generated due to excessive doping of nitrogen atoms, thus resulting in reduced electric capacity. The heat-treatment time is preferably from 0.1 to 24 hours, more preferably from 1 to 12 hours.

Thus, the active material for a battery according to the first embodiment can be obtained.

### [Confirmation Method of Active Material for Battery according to First Embodiment]

Next, a measurement method of a nitrogen-atom amount, a measurement of an average particle size of secondary particles, a confirmation method of an average particle size of primary particles, a measurement method of a specific surface area, a measurement method of an element-content by an ICP emission spectroscopy, and a confirmation method of a crystal structure, for the active material for a battery according to the first embodiment are described.

When the active material for a battery according to the first embodiment is incorporated in the battery, the material can be taken out, for example, by the following method. First, the battery is put into a discharged state. For example, the battery can be put into the discharge state by discharging it at 25°C at 0.1 C current to a final nominal voltage. Then, the discharged battery is disassembled, and an electrode (for example, a negative electrode) is taken out from the disassembled battery. The taken electrode is washed, for example, with methyl ethyl carbonate. The washed electrode is put in water, and the electrode layer is deactivated in water. An active material can be extracted from the deactivated electrode by using a centrifuge apparatus, or the like.

For example, when polyvinylidene fluoride is used as the binder, in the extraction treatment, washing is performed using N-methyl 2-pyrrolidone or the like to remove the binder component and then, the conductive agent is removed using a mesh having an appropriate opening. When these components exit in a slight amount, a heat-treatment in an air-atmosphere (for example at 250°C for 30 minutes) is performed to remove them.

### (Measurement Method of Nitrogen Atom Amount)

The nitrogen-atom content in the active material can be measured by the following procedures. First, the active material, which has been taken out as described above, is dried at 150°C for 12 hours. The dried active material is weighed and put into a container. The weighed active material is melted in an inert gas to obtain a sample. By the measurement of the sample using a thermal conductivity detector (for example, ONH836 manufactured by LECO Corporation), the nitrogen-atom content of the active material can be measured.

When the electrode contains another active material, the measurement can be performed as follows: The active material, taken out from the electrode, is subjected to observation with TEM-EDX (a transmission electron microscope provided with energy dispersive X-ray spectroscopy), and a crystal structure of each particle is specified by selected area diffraction. Particles having a diffraction pattern assigned to a niobium composite oxide are selected therefrom, and the nitrogen-atom content is measured. At this time, when nitrogen mapping is carried out by EDX, domains in the active material particle where nitrogen atoms exist can be found.

### (Measurement Method of Average Particle Size of Secondary Particles)

The measurement method of the average particle size of secondary particles of the active material is as described below. As a measurement apparatus, a laser diffraction particle size distribution analyzer (for example, SALD-300 manufactured by Shimadzu Corporation) can be used.

First, about 0.1 g of a sample, 1 mL to 2 mL of surfactant, and 1 mL to 2 mL distilled water are put into a beaker to obtain mixture, and the mixture is thoroughly stirred. The mixture is injected into a stirring-water tank, and a sample solution is prepared in this tank. Using the sample solution, luminosity distribution is measured 64 times at 2 second intervals, and the particle size distribution data is analyzed. From the analysis, the average particle size of the secondary particles of the active material can be obtained.

### (Confirmation Method of Average Particle Size of Primary Particles)

The average primary particle size of the active material can be confirmed by observation with a scanning electron microscope (SEM). Specifically, an average value of 10 typical particles, extracted from a typical field of vision, is obtained, and the average value is decided as the average primary particle size.

### (Measurement Method of Specific Surface Area)

As the method of measuring the specific surface area, a method in which a molecule whose adsorption occupancy area is known is adsorbed on the surface of a powder particle at a temperature of liquid nitrogen and the specific surface area of the sample is obtained from the adsorption amount can be employed. The most frequently used method is a BET method based on the low temperature/low humidity physical adsorption of an inert gas. This method is based on the best-known theory of the method of calculating the specific surface area in which the Langmuir theory as a monolayer adsorption theory is extended to multilayer adsorption. The specific surface area determined by the above method is referred to as "BET specific surface area".

### (Measurement Method of Element Content by ICP Emission Spectroscopy)

The quantification of the metal elements constituting the active material can be performed using ICP emission spectroscopy, for example, according to the following method. The active material, which has been extracted according to the procedures as described above, is weighed and put into a container, and is melted in an acid or alkali to obtain a solution for measurement. The solution for measurement is subjected to ICP emission spectrometry using a measuring apparatus (for example, SPS-1500V manufactured by SII Nanotechnology Inc.), whereby the content of each element in the active material can be measured.

### (Confirmation Method of Crystal Structure)

Next, the confirmation method of a crystal structure of the active material is described.

The crystal structure of the active material can be confirmed by wide-angel X-ray diffraction (XRD).

The wide-angle X-ray diffraction for the active material is performed as follows: First, a target sample is ground until the the average particle size becomes about 5 µm. The average particle size can be found, for example, by laser diffraction, or the like, as described above. The ground sample is filled in a holder part having a depth of 0.2 mm, formed on a glass sample plate. At this time, pay attention so that the sample is sufficiently filled in the holder part. In addition, pay attention so that cracks or voids are not generated due to insufficient filling of the sample. Next, the sample is thoroughly pressed with another glass plate from the outside to smooth the sample. At this time, pay attention so that an uneven surface protruding or depressing from a reference surface of the holder is not formed due to insufficent or excessive filling amount. Next, the glass plate in which the sample is filled is placed in a wide-angle X-ray diffraction apparatus, and a diffraction pattern is obtained using Cu-Kα rays.

If the sample has a high orientation, positional deviation of peaks may be caused or a peak-intensity ratio may be changed, depending on how the sample is filled. For such a sample, the sample is molded into pellets, and then the measurement is performed. The pellet may be a pressurized powder having, for example, a diameter of 10 mm and a thickness of 2 mm. The pressurized powder can be formed by applying a pressure of about 250 MPa to the sample for 15 minutes. The obtained pellets are placed in the X-ray diffraction apparatus, and the surface thereof is measured. When the measurement is performed using such a method, variations in measurement results caused by the operator can be excluded, and high repeatability can be obtained.

When the wide-angle X-ray diffraction measurement is performed for the active material contained in the electrode, for example, it can be performed as follows:
First, in order to comprehend the crystal state of the active material, the lithium ions are completely removed from the active material. For example, when it is used as the negative electrode, the battery is completely discharged. However, there may be sometimes lithium ions remaining even in the discharged state. Next, the battery is disassembled in a glove box filled with argon, and is washed with an appropriate solvent. For example, ethyl methyl carbonate may be used. The washed electrode is cut into almost the same area as that of a holder in the wide-angle X-ray diffraction apparatus, and the cut electrode is directly stuck to the glass holder, which may be measured. At this time, XRD is previously measured depending on the kind of the metal foil of the electrode current collector, and where a peak derived from the current collector appears is comprehended. In addition, the presence or absence of materials which are mixed with the active material, such as the conductive agent and the binder, is previously comprehended. When the peaks of the current collector is overlapped with the peaks of the active material, it is desirable that the active material is peeled off from the current collector, and then the measurement is performed. This is performed in order to separate the overlapped peaks from each other, when the peak intensity is quantitatively measured. If these have been previously comprehended, this operation can be of course omitted. The electrode mixture layer may be physically peeled off from the current collector, but the peeling-off can be easily performed by application of ultrasonic waves in a solvent. The wide-angle X-ray diffraction measurement for the active material can be performed by measuring the wide-angle X-ray diffraction of the thus recovered electrode mixture layer.

The thus obtained results of the wide-angle X-ray diffraction are analyzed according to a Rietveld method. In the Rietveld method, a diffraction pattern, which is obtained by calculating from a crystal structure model previously presumed, is fully fitted to measured values, whereby parameters (a lattice constant, atomic coordinate, occupancy rate, and the like) concerning the crystal structure can be refined and characteristics of a crystal structure of the active material to be measured can be examined.

Whether or not the added element M is substitutional-solidified can be judged by confirming the state of the crystal phase using the wide-angle X-ray diffraction analysis. The evaluation items may include, specifically, the presence or absence of appearance of an impurity phase, change of a lattice constant (which reflects an ionic radius of the element added), and the like. In a case of a slight amount of addition, however, there are some cases in which the judgement cannot be performed by these methods. In such a case, a distribution state of the element added can be found by performing a TEM observation and an EPMA measurement, whereby whether the element added is uniformly distributed in the solid or segregated can be judged.

As the active material for a battery according to the first embodiment contains the niobium composite oxide containing nitrogen atoms in a content of 0.01% to 3.02% by mass, it can can realize a nonaqueous electrolyte battery which can exhibit a high capacity and an excellent large-current characteristic.

### (Second embodiment)

According to the second embodiment, a nonaqueous electrolyte battery is provided. The nonaqueous electrolyte battery includes a positive electrode, a negative electrode, and a nonaqueous electrolyte. The negative electrode contains the active material for a battery according to the first embodiment.

The nonaqueous electrolyte battery according to the second embodiment may further include a separator provided between the positive electrode and the negative electrode. The positive electrode, the negative electrode, and the separator can form an electrode group. The nonaqueous electrolyte can be held in the electrode group.

The electrode group may have, for example, a stacked-type structure. In the stacked-type electrode group, multiple positive electrodes and multiple negative electrodes are alternately laminated with a separator sandwiched between them.

Alternatively, the electrode group may have a coiled-type structure. The coiled-type electrode group can be formed by coiling a laminate, obtained by laminating the positive electrode, the separator, and the negative electrode.

The nonaqueous electrolyte battery according to the second embodiment may further include a container member housing the electrode group and the nonaqueous electrolyte, a negative electrode terminal, and a positive electrode terminal.

The positive electrode and the negative electrode can be spatially separated from each other via the separator. The negative electrode terminal can be electrically connected to the negative electrode. The positive electrode terminal can be electrically connected to the positive electrode.

The container member, the negative electrode, the positive electrode, the nonaqueous electrolyte, the separator, the positive electrode terminal, and the negative electrode terminal are explained in detail below.

### 1) Exterior Member

The container member is formed from, for example, a laminate film having a thickness of 0.5 mm or less. Alternatively, the container member may be a metal container having, for example, a wall thickness of 1.0 mm or less. The wall thickness of the metal container is more preferably 0.5 mm or less.

The shape of the container member can be selected from, for example, a flat (thin) shape, a square shape, a cylindrical shape, a coin shape, and a button shape. Depending on the battery size, examples of the container member may include a container member for a small battery which is mounted to a portable electronic device or a container member for a large battery which is mounted to a two- or four-wheeled vehicle.

As the laminate film, for example, a multilayer film containing resin layers and a metal layer sandwiched between the resin layers is used. The metal layer is preferably an aluminum foil or an aluminum alloy foil for the weight reduction. As the resin layer, polymer materials such as polypropylene (PP), polyethylene (PE), nylon, and polyethylene terephthalate (PET) may be used. The laminate film can be sealed by thermal fusion bonding to form the shape of the container member.

The metal container is fabricated from, for example, aluminum, aluminum alloy, or the like. An alloy containing an element such as magnesium, zinc, or silicon is preferable as the aluminum alloy. When the alloy contains a transition metal such as iron, copper, nickel, or chromium, the content thereof is preferably 100 mass ppm or less.

### 2) Negative Electrode

The negative electrode may include a negative electrode current collector, and a negative electrode layer formed on one side or both sides of the negative electrode current collector.

The negative electrode current collector is preferably an aluminum foil or an aluminum alloy foil, each of which is electrochemically stable in a potential range nobler than 1 V (vs. Li/Li⁺), the aluminium alloy foil containing an element such as Mg, Ti, Zn, Mn, Fe, Cu, and Si,.

The aluminum foil or the aluminum alloy foil has preferably a thickness of 20 µm or less, more preferably 15 µm or less. The aluminum foil has preferably a purity of 99% or less. As the aluminum alloy, an alloy containing an element such as magnesium, zinc, or silicon is preferable. On the other hand, the content of the transition metal such as iron, copper, nickel, or chromium is preferably 1% or less.

The negative electrode layer can contain a negative electrode active material, a conductive agent, and a binder.

The active material for a battery according to the first embodiment may be contained in the negative electrode active material. The negative electrode active material may contain, as described in the first embodiment, a negative electrode active material other than the active material for a battery according to the first embodiment.

The negative electrode active material has preferably a specific surface area of 0.5 m²/g to 50 m²/g. When the specific surface area is 0.5 m²/g or more, insertion and extraction sites of lithium ions can be sufficiently secured. When the specific surface area is 50 m²/g or less, the handling in industrial production is easy. The specific surface area is more preferably from 3 m²/g to 30 m²/g.

The conductive agent can increase the current collecting performance of the negative electrode active material, and suppress the contact resistance with the current collector. Examples of the conductive agent may include acetylene black, carbon black, and graphite.

The binder can bind the negative electrode active material to the conductive agent. Examples of the binder may include polytetrafluoroethylene (PTFE), polyvinylidene fluoride (PVdF), fluororubber, and styrene-butadiene rubber.

It is preferable that, blending ratios of the negative electrode active material, the conductive agent, and the binder in the negative electrode layer are from 70% by mass to 96% by mass, from 2% by mass to 28% by mass, and from 2% by mass to 28% by mass, respectively. When the content of the conductive agent is 2% by mass or more, the current collecting performance of the negative electrode layer can be improved, and the large-current characteristic of the nonaqueous electrolyte battery can be improved. When the content of the binder is 2% by mass or more, the binding property between the negative electrode layer and the current collector can be increased, thus resulting in an improved cycle characteristic. On the other hand, in order to increase the capacity, it is preferable to adjust the content of each of the conductive agent and the binder to 28% by mass or less.

The negative electrode is produced by suspending the negative electrode active material, the conductive agent, and the binder in a general-purpose solvent to prepare a slurry, applying a current collector with the slurry and drying it, and then pressing. The negative electrode may also be produced by molding the active material, the conductive agent, and the binder into pellets, and forming a negative electrode layer on the current collector using the pellets.

### 3) Positive Electrode

The positive electrode may include a positive electrode current collector, and a positive electrode layer formed on one side or both sides of the positive electrode current collector.

The positive electrode current collector is preferably, for example, an aluminum foil or an aluminum alloy foil containing an element such as Mg, Ti, Zn, Mn, Fe, Cu, Si.

The positive electrode layer may contain a positive electrode active material, a conductive agent, and a binder.

As the positive electrode active material, for example, oxides, polymers, and the like can be used.

As the oxide, for example, manganese dioxide (MnO₂), iron oxide, copper oxide, and nickel oxide, each of which inserts lithium; lithium-manganese composite oxide (for example, LiₓMn₂O₄ and LiₓMnO₂); lithium-nickel composite oxide (for example, LiₓNiO₂), lithium-cobalt composite oxide (LiₓCoO₂), lithium-nickel-cobalt composite oxide (for example, LiNi_{1-y}Co_{y}O₂), lithium-manganese-cobalt composite oxide (for example, LiₓMn_{y}Co_{1-y}O₂), lithium-manganese-nickel composite oxide having a spinel structure (LiₓMn_{2-y}Ni_{y}O₄), lithium-phosphorus oxide having an olivine structure (for example, LiₓFePO₄, LiₓFe_{1-y}Mn_{y}PO₄, LiₓCoPO₄), iron sulfate (Fe₂(SO₄)₃), or vanadium oxide (for example, V₂O₅) may be used. In the formulae, x and y are preferably 0 < x ≤ 1 and 0 < y ≤ 1.

As the polymer, for example, conductive polymer materials such as polyaniline and polypyrrole, and disulfide polymer materials may be used. Sulphur (S) and carbon fluoride may also be used as the active material.

Examples of the preferable positive electrode active material may include lithium-manganese composite oxide (for example, LiₓMn₂O₄), lithium-nickel composite oxide (LiₓNiO₂), lithium-cobalt composite oxide (LiₓCoO₂), lithium-nickel-cobalt composite oxide (LiₓNi_{1-y}Co_{y}O₂), lithium-manganese-nickel composite oxide having a spinel structure (LiₓMn_{2-y}Ni_{y}O₄), lithium-manganese-cobalt composite oxide (LiₓMn_{y}Co_{1-y}O₂), and lithium iron phosphate (for example, LiₓFePO₄), each of which exhibits a high positive electrode voltage. In the formula, x and y are preferably 0 < x ≤ 1 and 0 ≤ y ≤ 1.

The conductive agent can increase the current collecting performance of the active material, and suppress the contact resistance with the current collector. Examples of the conductive agent may include carbonaceous substances such as acetylene black, carbon black, and graphite.

The binder can bind the active material to the conductive agent. Examples of the binder may include polytetrafluoroethylene (PTFE), polyvinylidene fluoride (PVdF), and fluororubber.

It is preferable that the blending ratios of the positive electrode active material, the conductive agent, and the binder in the positive electrode layer are from 80% by mass to 95% by mass, from 3% by mass to 18% by mass, and from 2% by mass to 17% by mass, respectively. When the conductive agent is contained in a content of 3% by mass or more, the effects described above can be exhibited. When the conductive agent is contained in a content of 18% by mass or less, the decomposition of the nonaqueous electrolyte on the conductive agent surface can be reduced during storage at a high temperature. When the binder is contained in a content of 2% by mass or more, a sufficient positive electrode strength can be obtained. When the binder is contained in a content of 17% by mass or less, the blending amount of the binder, which is an insulator in the positive electrode, can be reduced, and the internal resistance can be reduced.

The positive electrode is produced, for example, by suspending the positive electrode active material, the conductive agent, and the binder in a general-propose solvent to prepare a slurry, coating a current collector with the slurry and drying it, and then pressing it. The positive electrode may also be prepared by molding the positive electrode active material, the conductive agent, and the binder into pellets, and forming a positive electrode layer on the current collector using the pellets.

### 4) Nonaqueous Electrolyte

As the nonaqueous electrolyte, for example, a liquid nonaqueous electrolyte, prepared by dissolving an electrolyte in an organic solvent, or a gel nonaqueous electrolyte which is a composite of a liquid electrolyte and a polymer material may be used.

The liquid nonaqueous electrolyte is preferably one which is prepared by dissolving an electrolyte in an organic solvent at a concentration of 0.5 to 2.5 mol/L.

Examples of the electrolyte may include lithium salts such as lithium perchlorate (LiClO₄), lithium hexafluorophosphate (LiPF₆), lithium tetrafluoroborate (LiBF₄), lithium arsenic hexafluoride (LiAsF₆), lithium trifluoromethanesulfonate (LiCF₃SO₃), bis-trifluoromethyl sulfonyl imide lithium [LiN(CF₃SO₂)₂]; and mixtures thereof. Electrolytes which are not easily oxidized even at a high potential are preferable, and LiPF₆ is most preferable.

Examples of the organic solvent may include cyclic carbonates such as propylene carbonate (PC), ethylene carbonate (EC), and vinylene carbonate; linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxyethane (DME) and diethoxyethane (DEE); γ-butyrolactone (GBL), acetonitrile (AN), and sulfolane (SL). The organic solvents may be used alone or as a mixed solvent.

Examples of the polymer material may include polyvinylidene fluoride (PVdF), polyacrylonitrile (PAN), and polyethylene oxide (PEO).

The preferable organic solvent may include mixed solvents of at least two solvents selected from the group consisting of propylene carbonate (PC), ethylene carbonate (EC), and diethyl carbonate (DEC); or mixed solvents containing γ-butyrolactone (GBL). When such a mixed solvent is used, a nonaqueous electrolyte battery exhibiting an excellent high temperature property can be realised.

### 5) Separator

The separator may be formed from, for example, a porous film or a non-woven fabric of a synthetic resin, each of which contains polyethylene, polypropylene, cellulose, or polyvinylidene fluoride (PVdF). Preferable porous films may include porous films formed from polyethylene or polypropylene. Such a porous film can be melted at a given temperature to block electric current, and thus safety can be improved.

### 6) Negative Electrode Terminal

For the negative electrode terminal, for example, a material having electrical stability and electrical conductivity at a potential within a range of 1 V to 3 V based on the oxidation-reduction potential of lithium, can be used. The material may include specifically aluminum, and aluminum alloy containing an element such as Mg, Ti, Zn, Mn, Fe, Cu, or Si. It is preferable that the negative electrode terminal is formed from the same material as that of the negative electrode current collector in order to reduce the contact resistance with the negative electrode current collector.

### 7) Positive Electrode Terminal

For the positive electrode terminal, for example, a material, exhibiting electrical stability and electrical conductivity at a potential within a range of 3 V to 4.25 V based on the oxidation-reduction potential of lithium, can be used. The material may include specifically aluminum, and aluminum alloy containing an element such as Mg, Ti, Zn, Mn, Fe, Cu, or Si. It is preferable that the positive electrode terminal is formed from the same material as that of the positive electrode current collector, in order to reduce the contact resistance with the positive electrode current collector.

Next, one example of the nonaqueous electrolyte battery according to the second embodiment is explained, referring to the drawings.

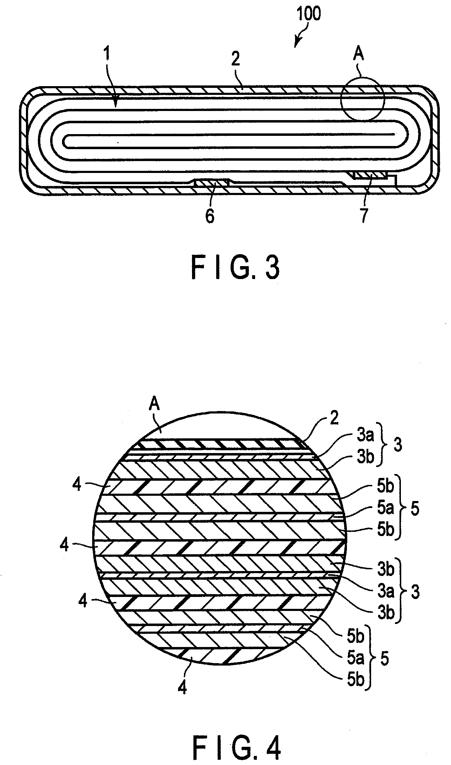

FIG. 3 is a schematic cross-sectional view showing a nonaqueous electrolyte battery, which is one example according to the second embodiment. FIG. 4 is an enlarged cross-sectional view of part A in FIG. 3.

The nonaqueous electrolyte battery 100 shown in FIG. 3 and FIG. 4 contains a flat-shaped coiled electrode group 1.

The flat-shaped coiled electrode group 1 includes, as shown in FIG. 4, a negative electrode 3, a separator 4, and a positive electrode 5. The separator 4 is sandwiched between the negative electrode 3 and the positive electrode 5. Such a flat-shaped coiled electrode group 1 can be formed, for example by laminating the negative electrode 3, the separator 4, the positive electrode 5 and one more separator 4 so that the separator 4 is sandwiched between the negative electrode 3 and the positive electrode 5 to obtain a laminate, coiling the laminate while disposing the negative electrode 3 on the outside, and press-molding the laminate, as shown in FIG. 4.

The negative electrode 3 includes a negative electrode current collector 3a and a negative electrode layer 3b. The outermost layer of the negative electrode 3 has, as shown in FIG. 4, a structure in which the negative electrode layer 3b is formed on only one side facing the center of the electrode group of the negative electrode current collectors 3a. In the other negative electrode 3, the negative electrode layers 3b are formed on both sides of the negative electrode current collector 3a.

The positive electrode 5 contains a positive electrode layer 5b formed on both sides of the positive electrode current collector 5a.

As shown in FIG. 3, in the vicinity of an outer peripheral edge of the coiled electrode group 1, the negative electrode terminal 6 is connected to the negative electrode current collector 3a of the outermost layer of the negative electrode 3, and the positive electrode terminal 7 is connected to the positive electrode current collector 5a of the inside positive electrode 5.

The coiled electrode group 1 is housed in a bag-shaped container 2 formed of a laminate film in which a metal layer is sandwiched between two resin layers.

The negative electrode terminal 6 and the positive electrode terminal 7 are extended from an opening of the bag-shaped container 2 to the outside. For example, a liquid nonaqueous electrolyte is injected into the bag-shaped container 2 through an opening thereof and housed in the bag-shaped container 2.

The bag-shaped container 2 is sealed by heat-sealing the opening while the negative electrode terminal 6 and the positive electrode terminal 7 are put in the opening. Thus, the coiled electrode group 1 and the liquid nonaqueous electrolyte are completely sealed in the bag-shaped container 2.

The nonaqueous electrolyte battery according to the second embodiment includes the negative electrode containing the active material for a battery according to the first embodiment. As a result, the nonaqueous electrolyte battery according to the second embodiment can exhibit a high capacity and an excellent large-current characteristic.

### (Third embodiment)

According to a third embodiment, a battery pack is provided. The battery pack includes a nonaqueous electrolyte battery according to the second embodiment.

The battery pack according to the third embodiment may include one nonaqueous electrolyte battery or may include nonaqueous electrolyte batteries. When the battery pack according to the third embodiment includes nonaqueous electrolyte batteries, the unit cells may be disposed so that they are electrically connected to each other in series or in parallel, or a connection in series and a connection in parallel may be combined.

Next, one example of the battery pack according to the third embodiment is explained, referring to the drawings.

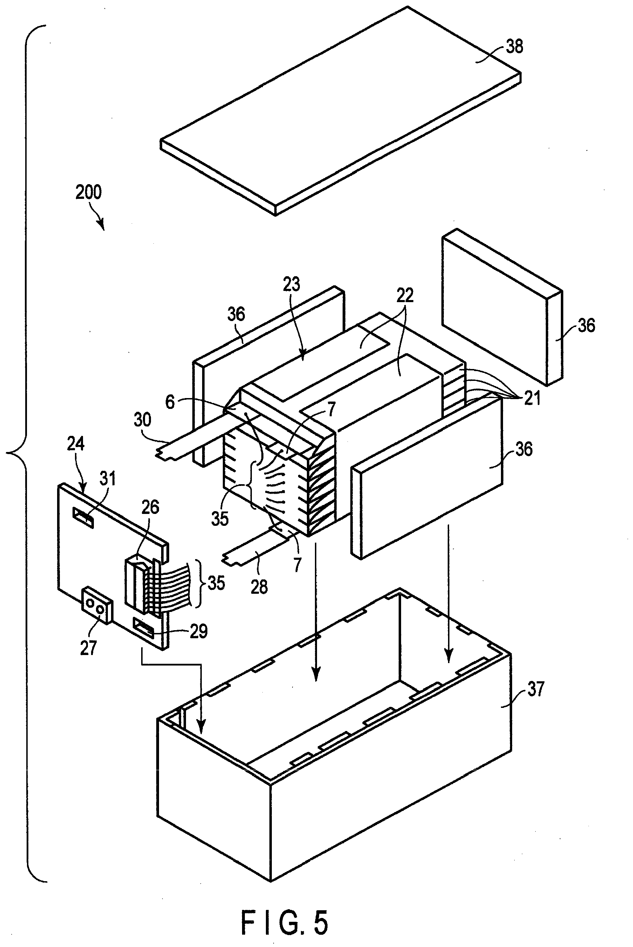

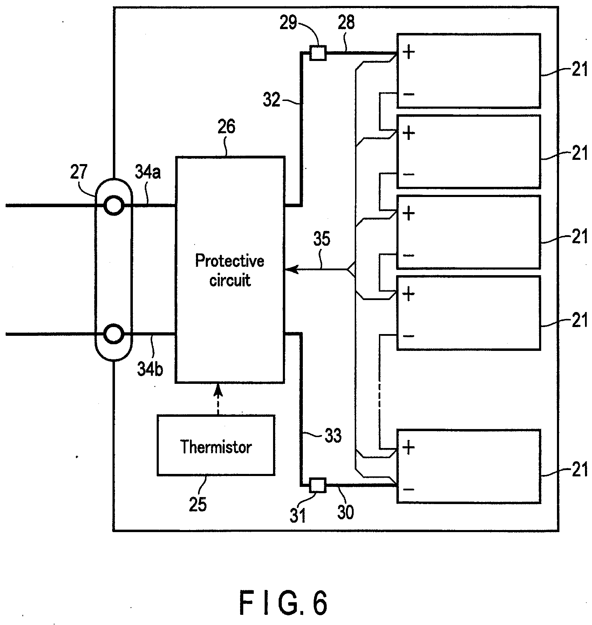

FIG. 5 is an exploded perspective view showing a battery pack of one example according to the third embodiment. FIG. 6 is a block diagram showing an electric circuit of the battery pack shown in FIG. 5.

A battery pack 200 shown in FIG. 5 and FIG. 6 includes flat-shaped batteries 21 each having the same structure as that in the nonaqueous electrolyte battery 100 shown in FIG. 3 and FIG. 4.

The unit cells 21 are stacked so that a negative electrode terminal 6 and a positive electrode terminal 7 extended to outside are arranged in the same direction, and fastened with an adhesive tape 22 to constitute a battery module 23. The unit cells 21 are, as shown in FIG. 6, electrically connected to each other in series.

A printed wiring board 24 is arranged opposed to the side face, of side faces of the battery module 23, from which the negative electrode terminals 6 and the positive electrode terminals 7 of the unit cells 21 are extended. On the printed wiring board 24, as shown in FIG. 6, a thermistor 25, a protective circuit 26, and a terminal 27 for passing electricity to an external device are mounted. An insulating plate (not shown) is attached to a surface of the printed wiring board 24 facing the battery module 23, in order to avoid unnecessary connections to electrical wiring of the battery module 23.

A positive electrode-side lead 28 is connected to the positive electrode terminal 7 of the unit cell 21 positioned in the bottom layer of the battery module 23, and the end thereof is inserted into a positive electrode-side connector 29 of the printed wiring board 24 to form an electrical connection. A negative electrode-side lead 30 is connected to the negative electrode terminal 6 of the unit cell 21 positioned in the top layer of the battery module 23, and the end thereof is inserted into a negative electrode-side connector 31 of the printed wiring board 24 to form an electrical connection. The connectors 29 and 31 are connected to the protective circuit 26 through wirings 32 and 33 formed on the printed wiring board 24.

The thermistor 25 detects a temperature of each of the unit cells 21, and the detection signals are transmitted to the protective circuit 26. The protective circuit 26 can shut down a plus-side wiring 34a and a minus-side wiring 34b between the protective circuit 26 and the terminal 27 for passing electricity to an external device under a predetermined condition. The predetermined condition may include, for example, a case where a signal in which the temperature of the unit cell 21 is a predetermined temperature or higher is received from the thermistor 25. Another example of the predetermined condition may include a case where over-charge, over-discharge, or over-current of the unit cells 21 is detected. The detection of the over-charge and the like is performed for the individual unit cell 21 or all unit cells 21. When the detection of the individual unit cell 21 is performed, the battery voltage may be detected, or the positive electrode potential or the negative electrode potential may be detected. In the latter case, a lithium electrode, which is used as a reference electrode, is inserted into individual unit cells 21. In the battery pack 200 shown in FIG. 5 and FIG. 6, a wiring 35 for detecting a voltage is connected to each of the unit cells 21, and detection signals are transmitted to the protective circuit 26 via the wiring 35.

Protective sheets 36 including rubber or a resin are arranged on three sides of the battery module 23, except for the side from which the positive electrode terminal 7 and the negative electrode terminal 6 are protruded.

The battery module 23 is housed in a housing container 37 together with the protective sheets 36 and the printed wiring board 24; that is, the protective sheets 36 are arranged on both of long-side inner surfaces of the housing container 37 and on one of short-side inner surfaces, and the printed wiring board 24 is arranged on the other side of the short-side inner surfaces. The battery module 23 is positioned in a space surrounded by the protective sheets 36 and the printed wiring board 24. A lid 38 is attached to a top surface of the housing container 37.

For fixation of the battery module 23, a heat-shrinkable tape may be used instead of the adhesive tape 22. In such a case, the protective sheets are placed on both sides of the battery module, heat-shrinkable tape is wound around them, and then the heat-shrinkable tape is heat-shrunk to bundle the battery module.

The battery pack 200 shown in FIG. 5 and FIG. 6 has a form in which multiple unit cells 21 are connected to each other in series; however, in the battery pack according to the third embodiment, multiple unit cells 21 may be connected to each other in parallel, in order to increase the battery capacity. Alternatively, in the battery pack according to the third embodiment, connection in series and connection in parallel of the multiple unit cells 21 may be combined. Assembled battery packs 200 may be further connected to each other in series or in parallel.

The battery pack 200 shown in FIG. 5 and FIG. 6 contains multiple unit cells 21, but the battery pack according to the third embodiment may contain one unit cell 21.

The aspect of the battery pack may be appropriately modified depending on the application. The battery pack according to this embodiment is preferably used in an application requiring an excellent cycle characteristic when a large current is taken out. Specifically, it is used, for example, as a power source for digital cameras, or as a battery mounted on a two- to four-wheeled hybrid electric car, two- to four-wheeled electric car, and an electric assist bicycle. In particular, it is preferably used as a battery mounted on vehicles.

The battery pack according to the third embodiment contains the nonaqueous electrolyte battery according to the second embodiment. As a result, the battery pack according to the third embodiment can exhibit a high capacity and an excellent large-current characteristic.

### [Example]

Examples are explained below, but the present invention is not limited to the Examples described below without departing from the gist of the present invention.

### (Examples 1 to 4 and Comparative Example 1)

In Example 1, a beaker cell of Example 1 using Sample B1 as the active material was fabricated according to the following procedures. In addition, a beaker cell of Comparative Example 1 using Sample A1 as the active material, and beaker cells of Examples 2 to 4 using Samples C1 to E1 as the active material were also fabricated according to the following procedures.

### <Preparation of Samples A1, B1, C1, D1 and E1>

Titanium dioxide (TiO₂) having an anatase structure and niobium pentoxide (Nb₂O₅) were mixed in a molar ratio of 1 : 1, and the obtained mixture was sintered at 1100°C for 24 hours.

It was confirmed, using wide-angle X-ray diffraction described below, that the substance obtained by the sintering was a niobium composite oxide represented by the composition formula TiNb₂O₇.

Next, the thus obtained niobium composite oxide was subjected to a grinding treatment in a ball mill using zirconia beads having a diameter of 5 mmΦ for 12 hours to adjust the particle size thereof to obtain a powder of Sample A1 (a base material) having an average particle size of 0.8 µm.

Next, Sample A1 was divided to five samples. Four samples thereof were fired at a firing temperature of 550°C in an ammonia stream (100 mL/minute) for different times from each other. The powder obtained by a 1 hour-firing was used as Sample B1, the powder obtained by a 3 hour-firing was used as Sample C1, the powder obtained by a 6 hour-firing was used as Sample D1, and the powder obtained by a 12 hour-firing was used as Sample E1. <Wide-Angle X-Ray Diffraction>

A part of each of Samples A1 to E1 prepared as above was filled in a standard glass holder having a diameter of 25 mm, and measurement was performed using wide-angle X-ray diffraction. From the diffraction patterns, it was confirmed that a main substance constituting each of the obtained Samples A1 to E1 was a monoclinic niobium composite oxide (a space group C2/m), assigned to JCPDS (Joint Committee on Powder Diffraction Standards) 39-1407, and represented by the composition formula of TiNb₂O₇. The apparatus and conditions used for the measurement are shown below.
(1) X-ray generator: RU-200R (rotating anticathode type) manufactured by Rigaku Corporation
   X-ray source: CuKα rays
   A curved crystal monochromator (graphite) was used. Output: 50 kV, 200 mA
(2) Goniometer: 2155S2 manufactured by Rigaku Corporation
   Slit System: 1° - 1° - 0.15 mm - 0.45 mm
   Detector: Scintillation Counter
(3) Counting Recording Apparatus: RINT1400 manufactured by Rigaku Corporation
(4) Scan Method: 2 θ/θ Continuous Scanning
(5) Qualitative Analyze
   Measurement Range (2θ): 5° to 100°
   Scanning Speed: 2°/minute
   Step Width (2θ): 0.02°

### <Fabrication of Electrode>

To N-methyl pyrrolidone (NMP) were added 90% by mass of the powder of Sample B1, 5% by mass of acetylene black as a conductive agent, and 5% by mass of polyvinylidene fluoride (PVdF) as a binder, and were mixed to prepare a slurry. The slurry was coated on both sides of a current collector formed of an aluminum foil having a thickness of 12 µm, and the coating films were dried. After that, the coating films were pressed to obtain an electrode of Example 1 containing electrode layers having a density of 2.8 g/cm³.

In addition, electrodes of Comparative Example 1 and Examples 2 to 4 were fabricated using the powder of Sample A1 and Samples C1 to E1 in the same manner as in the fabrication of the electrode of Example 1.

### <Preparation of Liquid Nonaqueous Electrolyte>

Ethylene carbonate (EC) and diethyl carbonate (DEC) were mixed in a volume ratio of 1 : 2 to obtain a mixed solvent. In the mixed solvent was dissolved LiPF₆, which was the electrolyte, in a concentration of 1 M to obtain a liquid nonaqueous electrolyte.

### <Production of Beaker Cell>

A beaker cell in which the electrode of Example 1 was used as a working electrode and lithium metal was used as a counter electrode and a reference electrode was fabricated. The liquid nonaqueous electrolyte obtained above was injected into the beaker cell fabricated to complete a beaker cell of Example 1.

In addition, a beaker cell of Comparative Example 1 and beaker cells of Examples 2 to 4 were completed using, respectively, the electrode of Comparative Example 1 and electrodes of Examples 2 to 4 in the same manner as in the production of the beaker cell of Example 1.

### <Measurement of Battery Performance>

The beaker cells of Examples 1 to 4 and Comparative Example 1 were put in an environment of 25°C and discharged at a constant-current and constant-voltage of 1 C and 1 V for 3 hours to insert lithium. Then, the cells were charged at a constant current of 1 C until the cell voltage reached 3 V to extraction lithium. The lithium-extraction capacity obtained at this time was defined as an initial capacity.

Next, the cells were put in an environment of 25°C, and they were discharged at a constant-current and constant-voltage of 1 C and 1 V for 3 hours to insert lithium, and charged at a constant-current of 10 C until the cell voltage reached 3 V to extraction lithium. The lithium-extraction capacity obtained at this time was defined as a second capacity. A large-current performance of each of the active materials for a battery (= Second Capacity/Initial Capacity × 100 [%]) is shown in Table 1 below.

Further, the cells were put in an environment of 25°C, and then discharged at a constant-current and constant-voltage of 1 C and 1 V for 3 hours to insert lithium, and charged at a constant-current of 1 C until the cell voltage reached 3 V to extraction lithium. A set of the discharge and the charge was defined as one cycle of charge-and-discharge. The charge-and-discharge cycle was repeated 100 times. A capacity retention ratio (= Capacity at the 100th cycles/Initial Capacity × 100 [%]), which is an index of a life characteristic of an active material for battery, is shown in Table 1 below.

### <Measurement of Volume Resistivity>

A powder resistance of each of Samples A1 to E1 was measured by a method shown below. A volume resistivity in a state compressed at 12 MPa/cm² (12 kN) is shown in Table 1.
(1) Powder Resistance Measuring System (MCP-PD51) manufactured by Mitsubishi Chemical Analytech Co., Ltd.
(2) Special-Purpose Probe for Powder: Loresta GP (MCP-T610)/Hiresta-UX (MCP-HT800)
(3) Procedure
   (a) 3 g of a sample is weighed and put in a sample table (made of SUS, ϕ 10 mm).
   (b) The sample is pressurized with 4 kN → 8 kN → 12 kN → 16 kN → 20 kN in this order.
   (c) A thickness of the sample is measured, and a volume resistivity is calculated.
   (d) A pressure-volume resistivity diagram is made based on the pressure applied and the volume resistivity.

### <Nitrogen-Atom Content>

A nitrogen-atom content of each of Samples A1 to E1 was measured by the thermal conductivity detector, as described above. The results are shown in Table 1 below.

A distribution state of nitrogen atoms in each of Samples B1 to E1 was confirmed by performing a cross-section TEM-EDX analysis of agglomerates, and obtaining a mapped image of nitrogen. From the results, it was confirmed that nitrogen atoms existed on the surface of each of Samples B1 to E1 in a high concentration.

**[Table 1]**

| | Active Material | Volume Resistivity (Ω·cm) | Nitrogen Atom Content (mass %) | Initial Capacity (mAh/g) | Large Current Characteristic (%) | Capacity Retention Ratio (%) |
|---|---|---|---|---|---|---|
| Comparative Example 1 | Sample A1 | 1.2×10⁷ | 0 | 254 | 80 | >20 |
| Example 1 | Sample B1 | 9.8×10⁴ | 0.02 | 267 | 85 | 78 |
| Example 2 | Sample C1 | 8.4×10³ | 0.28 | 272 | 90 | 82 |
| Example 3 | Sample D1 | 1.0×10³ | 1.04 | 268 | 92 | 86 |
| Example 4 | Sample E1 | 8.8×10² | 3.01 | 257 | 88 | 84 |

From the results shown in Table 1, it is found that the capacity and the capacity retention ratio of each of the beaker cells of Examples 1 to 4, using Samples B1 to E1 containing nitrogen atoms in a content of 0.02% by mass to 3.01% by mass, were superior to those of the beaker cell of Comparative Example 1 using Sample A1 containing no nitrogen atoms.

It can be considered that in each of the beaker cells of Examples 1 to 4, the surface reaction on the active material was suppressed and the conductive network among the particles was maintained for a long time, whereby a good life performance was exhibited.

### (Examples 11 to 14 and Comparative Example 11)

In Example 11, a beaker cell of Example 11 using Sample B2 as the active material was fabricated according to the following procedures. In addition, a beaker cell of Comparative Example 11 using Sample A2 as the active material, and beaker cells of Examples 12 to 14 using Samples C2 to E2 as the active material were also fabricated according to the following procedures.

### <Preparation of Samples A2, B2, C2, D2 and E2>

Niobium pentoxide (Nb₂O₅) powder, belonging to a space group P 12/m 1, was provided. This powder was used as Sample A2 (base material).

Next, Sample A2 was divided to five samples. Four samples thereof were fired at a firing temperature of 550°C in an ammonia stream (100 mL/minute) for different times from each other. The powder obtained by a 1 hour-firing was used as Sample B2, the powder obtained by a 3 hour-firing was used as Sample C2, the powder obtained by a 6 hour-firing was used as Sample D2, and the powder obtained by a 12 hour-firing was used as Sample E2.

### <Fabrication of Electrode and Beaker Cell>

Using each of the obtained Samples A2 to E2, an electrode of each of Comparative Example 11 and Examples 11 to 14 was fabricated in the same procedures as in Example 1. Using each electrode, a beaker cell of each of Comparative Example 11 and Examples 11 to 14 was fabricated in the same procedures as in Example 1.

### <Evaluation of Samples A2 to E2>

Measurement was performed for Samples A2 to E2 according to the wide-angle X-ray diffraction in the same manner as in the case of Samples A1 to E1. As a result, it was confirmed that a main substance constituting each of the obtained Samples A2 to E2 was a monoclinic niobium composite oxide (a space group P12/m1, and represented by the composition formula of Nb₂O₅.

The nitrogen-atom content of each of Samples A2 to E2 was measured by using the thermal conductivity detector as described above. The results are shown in Table 2. A distribution state of nitrogen atoms in each Sample B2 to E2 was confirmed by performing a cross-section TEM-EDX analysis of agglomerates, and obtaining a mapped image of nitrogen. From the results, it was confirmed that nitrogen atoms existed on the surface of each of Samples B2 to E2 in a high concentration.

In addition, a volume resistivity of each of Samples A2 to E2 was measured in the same manner as in the case of Samples A1 to E1. The results are shown in Table 2.

### <Measurement of Battery Performance>

The battery performance was measured for the beaker cell of each of Examples 11 to 14 and Comparative Example 11 in the same manner as in Example 1. The results are shown in Table 2.

**[Table 2]**

| | Active Material | Volume Resistivity (Ω·cm) | Nitrogen Atom Content (mass %) | Initial Capacity (mAh/g) | Large Current Characteristic (%) | Capacity Retention Ratio (%) |
|---|---|---|---|---|---|---|
| Comparative Example 11 | Sample A2 | 2.6×10⁷ | 0 | 198 | 75 | >20 |
| Example 11 | Sample B2 | 1.0×10⁵ | 0.01 | 232 | 80 | 70 |
| Example 12 | Sample C2 | 2.4×10⁴ | 0.24 | 242 | 85 | 78 |
| Example 13 | Sample D2 | 3.6×10³ | 0.97 | 240 | 87 | 82 |
| Example 14 | Sample E2 | 1.0×10³ | 2.74 | 218 | 83 | 80 |

From the results in Table 2, it is found that the capacity and the capacity retention ratio of each of the beaker cells of Examples 11 to 14, using Samples B2 to E2 containing nitrogen atoms in a content of 0.01% by mass to 2.74% by mass, were superior to those of the beaker cell of Comparative Example 11 using Sample A2 containing no nitrogen atoms.

In Example 11 series, it can also be considered that in each of the beaker cells of Examples 11 to 14, the surface reaction on the active material was suppressed and the conductive network among the particles was maintained for a long time, whereby a good life performance was exhibited.

### (Examples 21 to 24 and Comparative Example 21)

In Example 21, a beaker cell of Example 21 using Sample B3 as the active material was fabricated according to the following procedures. In addition, a beaker cell of Comparative Example 21 using Sample A3 as the active material, and beaker cells of Examples 22 to 24 using Samples C3 to E3 as the active material were also fabricated according to following procedures.

### <Preparation of Samples A3, B3, C3, D3, and E3>

Titanium dioxide (TiO₂) having an anatase structure, niobium pentoxide (Nb₂O₅), and molybdenum oxide (MoO₂) were mixed in a molar ratio of 0.95 : 1 : 0.05, and the obtained mixture was sintered at 1100°C for 24 hours. It was confirmed by the wide-angle X-ray diffraction described above that the substance obtained by the sintering was a monoclinic niobium composite oxide (a space group C2/m), represented by composition formula of Ti_{0.95}Mo_{0.05}Nb₂O₇.

The thus obtained monoclinic niobium composite oxide was subjected to a grinding treatment in the same manner as in the preparation of Sample A1. The thus obtained powder was used as Sample A3 (base material).

Next, Sample A3 was divided to five samples. Four samples thereof were fired at a firing temperature of 550°C in an ammonia stream (100 mL/minute) for different times from each other. The powder obtained by a 1 hour-firing was used as Sample B3, the powder obtained by a 3 hour-firing was used as Sample C3, the powder obtained by a 6 hour-firing was used as Sample D3, and the powder obtained by a 12 hour-firing was used as Sample E3.

### <Fabrication of Electrode and Beaker Cell>

Using each of the obtained Samples A3 to E3, an electrode of each of Comparative Example 21 and Examples 21 to 24 was fabricated in the same procedures as in Example 1. Using each electrode, a beaker cell of each Comparative Example 21 and Example 21 to 24 was fabricated in the same procedures as in Example 1.

### <Evaluation of Samples A3 to E3>

The nitrogen-atom content of Samples A3 to E3 was measured by using the thermal conductivity detector as described above. The results are shown in Table 3. A distribution state of nitrogen atoms in each of Samples B3 to E3 was confirmed by performing cross-section TEM-EDX analysis of agglomerates, and obtaining a mapped image of nitrogen. From the results, it was confirmed that nitrogen atoms existed on the surface of each of Samples B3 to E3 in a high concentration.

In addition, a volume resistivity of each of Samples A3 to E3 was measured in the same manner as in the case of Samples A1 to E1. The results are shown in Table 3.

### <Measurement of Battery Performance>

The battery performance was measured for the beaker cell of each of Examples 21 to 24 and Comparative Example 21 in the same manner as in Example 1. The results are shown in Table 3.

**[Table 3]**

| | Active Material | Volume Resistivity (Ω·cm) | Nitrogen Atom Content (mass %) | Initial Capacity (mAh/g) | Large Current Characteristic (%) | Capacity Retention Ratio (%) |
|---|---|---|---|---|---|---|
| Comparative Example 21 | Sample A3 | 6.2×10⁵ | 0 | 241 | 82 | >20 |
| Example 21 | Sample B3 | 9.8×10³ | 0.02 | 257 | 86 | 80 |
| Example 22 | Sample C3 | 3.6×10³ | 0.24 | 261 | 92 | 84 |
| Example 23 | Sample D3 | 8.8×10² | 1.01 | 258 | 93 | 87 |
| Example 24 | Sample E3 | 1.0×10² | 2.99 | 250 | 90 | 85 |

From the results in Table 3, it is found that the capacity and the capacity retention ratio of each of the beaker cells of Examples 21 to 24, using Samples B3 to E3 containing nitrogen atoms in a content of 0.02% by mass to 2.99% by mass, were superior to those of the beaker cell of Comparative Example 21 using Sample A3 containing no nitrogen atoms.

In Example 21 series, it can also be considered that in each of the beaker cells of Examples 21 to 24, the surface reaction on the active material was suppressed and the conductive network among the particles was maintained for a long time, whereby a good life performance was exhibited.

### (Examples 31 to 34 and Comparative Example 31)

In Example 31, a beaker cell of Example 31 using Sample B4 as the active material was fabricated according to the following procedures. In addition, a beaker cell of Comparative Example 31 using Sample A4 as the active material, and beaker cells of Examples 32 to 34 using Samples C4 to E4 as the active material were also fabricated according to following procedures.

### <Preparation of Samples A4, B4, C4, D4, and E4>

Titanium dioxide (TiO₂) having an anatase structure, niobium pentoxide (Nb₂O₅), iron oxide (Fe₂O₃), vanadium oxide (V₂O₅) were mixed in a molar ratio of 0.95 : 1 : 0.0125 : 0.0125, and the obtained mixture was sintered at 1100°C for 24 hours. It was confirmed by the wide-angle X-ray diffraction described above that the substance obtained by the sintering was a monoclinic niobium composite oxide (a space group C2/m), represented by the composition formula of Ti_{0.95}Fe_{0.025}V_{0.025}Nb₂O₇.

The thus obtained monoclinic niobium composite oxide was subjected to a grinding treatment in the same manner as in the preparation of Sample A1. The thus obtained powder was used as Sample A4 (base material).

Next, Sample A4 was divided into five samples. Four samples thereof were fired at a firing temperature of 550°C in an ammonia stream (100 mL/minute) for different times from each other. The powder obtained by a 1 hour-firing was used as Sample B4, the powder obtained by a 3 hour-firing was used as Sample C4, the powder obtained by a 6 hour-firing was used as Sample D4, and the powder obtained by a 12 hour-firing was used as Sample E4.

### <Fabrication of Electrode and Beaker Cell>

Using each of the obtained Samples A4 to E4, an electrode of each of Comparative Example 31 and Examples 31 to 34 was fabricated in the same procedures as in Example 1. Using each electrode, a beaker cell of each of Comparative Example 31 and Examples 31 to 34 was fabricated in the same procedures as in Example 1.

### <Evaluation of Samples A4 to E4>

The nitrogen-atom content of each of Samples A4 to E4 was measured by using the thermal conductivity detector as described above. The results are shown in Table 4. A distribution state of nitrogen atoms in each of Samples B4 to E4 was confirmed by performing the cross-section TEM-EDX analysis of agglomerates, and obtaining a mapped image of nitrogen. From the results, it was confirmed that nitrogen atoms existed on the surface of each of Samples B4 to E4 in a high concentration.

In addition, a volume resistivity of each of Samples A4 to E4 was measured in the same manner as in the case of Samples A1 to E1. The results are shown in Table 4 below.

### <Measurement of Battery Performance>

The battery performance was measured for the beaker cell of each of Examples 31 to 34 and Comparative Example 31 in the same manner as in Example 1. The results are shown in Table 4.

**[Table 4]**

| | Active Material | Volume Resistivity (Ω·cm) | Nitrogen Atom Content (mass %) | Initial Capacity (mAh/g) | Large Current Characteristic (%) | Capacity Retention Ratio (%) |
|---|---|---|---|---|---|---|
| Comparative Example 31 | Sample A4 | 6.0×10⁵ | 0 | 237 | 82 | >20 |
| Example 31 | Sample B4 | 8.8×10³ | 0.01 | 252 | 85 | 77 |
| Example 32 | Sample C4 | 2.4×10³ | 0.20 | 259 | 92 | 83 |
| Example 33 | Sample D4 | 6.8×10² | 0.98 | 255 | 93 | 84 |
| Example 34 | Sample E4 | 1.0×10² | 3.02 | 245 | 90 | 82 |

From the results in Table 4, it is found that the capacity and the capacity retention ratio of each of the beaker cells of Examples 31 to 34, using Samples B4 to E4 containing nitrogen atoms in a content of 0.01% by mass to 3.02% by mass, were superior to those of the beaker cell of Comparative Example 31 using Sample A4 containing no nitrogen atoms.

In Example 31 series, it can also be considered that in each of the beaker cells of Examples 31 to 34, the surface reaction on the active material was suppressed and the conductive network between the particles was maintained for a long time, whereby a good life performance was exhibited.

### (Examples 51 to 54 and Comparative Example 51)

In Example 51, a beaker cell of Example 51 using Sample B5 as the active material was fabricated according to the following procedures. In addition, a beaker cell of Comparative Example 51 using Sample A5 as the active material, and beaker cells of Examples 52 to 54 using Samples C5 to E5 as the active material were also fabricated according to following procedures.

### <Preparation of Samples A5, B5, C5, D5, and E5>

Titanium dioxide (TiO₂) having an anatase structure and niobium pentoxide (Nb₂O₅) were mixed in a molar ratio of 0.99 : 1.005, and the obtained mixture was sintered at 1100°C for 24 hours. It was confirmed by the wide-angle X-ray diffraction described above that the substance obtained by the sintering was a monoclinic niobium composite oxide (a space group C2/m), represented by the composition formula Ti_{0.99}Nb_{2.01}O₇.

The thus obtained monoclinic niobium composite oxide was subjected to a grinding treatment in the same manner as in the preparation of Sample A1. The thus obtained powder was used as Sample A5 (base material).

Next, Sample A5 was divided to five samples. Four samples thereof were fired at a firing temperature of 550°C in an ammonia stream (100 mL/minute) for different times from each other. The powder obtained by a 1 hour-firing was used as Sample B5, the powder obtained by a 3 hour-firing was used as Sample C5, the powder obtained by a 6 hour-firing was used as Sample D5, and the powder obtained by a 12 hour-firing was used as Sample E5.

### <Fabrication of Electrode and Beaker Cell>

Using each of the obtained Samples A5 to E5, an electrode of each of Comparative Example 51 and Examples 51 to 54 was fabricated in the same procedures as in Example 1. Using each electrode, a beaker cell of each of Comparative Example 51 and Examples 51 to 54 was fabricated in the same procedures as in Example 1.

### <Evaluation of Samples A5 to E5>

The nitrogen-atom content of each of Samples A5 to E5 were measured by using the thermal conductivity detector as described above. The results are shown in Table 5. A distribution state of nitrogen atoms in each of Samples B5 to E5 was confirmed by performing cross-section TEM-EDX analysis of agglomerates, and obtaining a mapped image of nitrogen. From the results, it was confirmed that nitrogen atoms existed on the surface of each of Samples B5 to E5 in a high concentration.

In addition, a volume resistivity of each of Samples A5 to E5 was measured in the same manner as in the case of Samples A1 to E1. The results are shown in Table 5 below.

### <Measurement of Battery Performance>

The battery performance was measured for each of the beaker cells of Examples 51 to 54 and Comparative Example 51 in the same manner as in Example 1. The results are shown in Table 5.

**[Table 5]**

| | Active Material | Volume Resistivity (Ω·cm) | Nitrogen Atom Content (mass %) | Initial Capacity (mAh/g) | Large Current Characteristic (%) | Capacity Retention Ratio (%) |
|---|---|---|---|---|---|---|
| Comparative Example 51 | Sample A5 | 1.2×10⁶ | 0 | 257 | 80 | >20 |
| Example 51 | Sample B5 | 9.8×10³ | 0.02 | 269 | 86 | 82 |
| Example 52 | Sample C5 | 3.2×10³ | 0.25 | 275 | 92 | 88 |
| Example 53 | Sample D5 | 8.8×10² | 1.02 | 270 | 94 | 90 |
| Example 54 | Sample E5 | 3.2×10² | 2.99 | 260 | 91 | 84 |

From the results in Table 5, it is found that the capacity and the capacity retention ratio of each of the beaker cells of Examples 51 to 54, using Samples B5 to E5 containing nitrogen atoms in a content of 0.02% by mass to 2.99% by mass, were superior to those of the beaker cell of Comparative Example 51 using Sample A5 containing no nitrogen atoms.

In Example 51 series, it can also be considered that in each of the beaker cells of Examples 51 to 54, the surface reaction on the active material was suppressed and the conductive network among the particles was maintained for a long time, whereby a good life performance was exhibited.

The active material for a battery according to at least one embodiment or example described avove contains the niobium composite oxide containing nitrogen atoms in a content of 0.01% to 3.02% by mass, and thus can realize a nonaqueous electrolyte battery which can exhibit a high capacity and an excellent large-current characteristic.

While certain embodiments have been described, these embodiments have been presented by way of example only, and are not intended to limit the scope of the inventions.

## Claims

1. An active material comprising a niobium composite oxide, which is represented by a general formula of LiₓM_{(1-y)}Nb_{y}Nb₂O_{(7+δ)}, wherein M is at least one selected from the group consisting of Ti and Zr, and x, y and δ satisfy 0 ≤ x ≤ 6, 0 ≤ y ≤ 1, and -1 ≤ δ ≤ 1, respectively, and the niobium composite oxide comprises nitrogen atoms in a content of 0.01% to 3.02% by mass.

2. The active material according to claim 1, wherein the niobium composite oxide comprises the nitrogen atoms in a content of 0.03% to 1% by mass.

3. The active material according to claim 1, wherein the niobium composite oxide has a monoclinic crystal structure.

4. The active material according to claim 3, wherein the monoclinic crystal stracture belongs to a space group C2/m or P12/m1.

5. The active material according to any of claims 1 to 4, which comprises particles of the niobium composite oxide, and a concentration of the nitrogen atom in a surface of each of the particles of the niobium composite oxide is higher than a concentration of the nitrogen atom in an inside of each of the particles of the niobium composite oxide.

6. The active material according to claim 5, wherein each of the particles of the niobium composite oxide comprises a surface phase having a depth of 20 nm from the surface, and a core phase inside the surface phase, and
the surface phase has a nitrogen-atom concentration which is higher than a nitrogen-atom concentration in the core phase.

7. A nonaqueous electrolyte battery (100) comprising:
a positive electrode (5);
a negative electrode (3) comprising the active material according to any one of claims 1 to 6; and
a nonaqueous electrolyte.

8. A battery pack (200) comprising the nonaqueous electrolyte battery (21, 100) according to claim 7.

9. A battery module (23) comprising nonaqueous electrolyte batteries (21, 100) each of which comprises:
a positive electrode (5);
a negative electrode (3) comprising the active material according to any of claims 1 to 6; and
a nonaqueous electrolyte.

10. A battery pack (200) comprises the battery module (23) according to claim 9.

11. The battery pack (200) according to claim 10, further comprising a protective circuit (26) configured to detect a voltage of each of the nonaqueous electrolyte batteries (21, 100).

12. A battery pack (200) comprising a plurality of a nonaqueous electrolyte batteries (21, 100) each of which comprises:
a positive electrode (5);
a negative electrode (3) comprising the active material according to any of claims 1 to 6; and
a nonaqueous electrolyte,
wherein the nonaqueous electrolyte batteries (21, 100) are connected in series, in parallel or with a combination of series connection and parallel connection.

13. A vehicle comprising the battery pack (200) according to any one of claims 8 and 10 to 12.

## Patentansprüche

1. Aktivmaterial, umfassend ein Niob-Kompositoxid, das durch die allgemeine Formel LiₓM_{(1-y)}Nb_{y}Nb₂O_{(7+δ)} wiedergegeben wird, wobei M mindestens ein Vertreter ist, der aus der Gruppe ausgewählt ist, die aus Ti und Zr besteht, und x, y und δ 0 ≤ x ≤ 6, 0 ≤ y ≤ 1 bzw. -1 ≤ δ ≤ 1 erfüllen, und das Niob-Kompositoxid Stickstoffatome in einem Gehalt von 0,01 Massen-% bis 3,02 Massen-% umfasst.

2. Aktivmaterial gemäß Anspruch 1, wobei das Niob-Kompositoxid die Stickstoffatome in einem Gehalt von 0,03 Massen-% bis 1 Massen-% umfasst.

3. Aktivmaterial gemäß Anspruch 1, wobei das Niob-Kompositoxid eine monokline Kristallstruktur aufweist.

4. Aktivmaterial gemäß Anspruch 3, wobei die monokline Kristallstruktur zur Raumgruppe C2/m oder P12/ml gehört.

5. Aktivmaterial gemäß einem der Ansprüche 1 bis 4, das Partikel des Niob-Kompositoxids umfasst und wobei eine Konzentration des Stickstoffatoms in einer Oberfläche von jedem Partikel des Niob-Kompositoxids höher als eine Konzentration des Stickstoffatoms in einem Inneren von jedem Partikel des Niob-Kompositoxids ist.

6. Aktivmaterial gemäß Anspruch 5, wobei jeder Partikel des Niob-Kompositoxids eine Oberflächenphase mit einer Tiefe von 20 nm von der Oberfläche und eine Kernphase innerhalb der Oberflächenphase umfasst, und die Oberflächenphase eine Stickstoffatomkonzentration aufweist, die höher als eine Stickstoffatomkonzentration in der Kernphase ist.

7. Nicht-wässrige Elektrolytbatterie (100), umfassend:
eine positive Elektrode (5);
eine negative Elektrode (3), die das Aktivmaterial gemäß einem der Ansprüche 1 bis 6 umfasst; und
einen nicht-wässrigen Elektrolyt.

8. Batteriepack (200), umfassend die nicht-wässrige Elektrolytbatterie (21, 100) gemäß Anspruch 7.

9. Batteriemodul (23), umfassend nicht-wässrige Elektrolytbatterien (21, 100), von denen jede umfasst:
eine positive Elektrode (5);
eine negative Elektrode (3), die das Aktivmaterial gemäß einem der Ansprüche 1 bis 6 umfasst; und
einen nicht-wässrigen Elektrolyt.

10. Batteriepack (200), umfassend das Batteriemodul (23) gemäß Anspruch 9.

11. Batteriepack (200) gemäß Anspruch 10, zusätzlich umfassend eine Schutzschaltung (26), die so konfiguriert ist, dass sie die Spannung von jeder der nicht-wässrigen Elektrolytbatterien (21, 100) detektiert.

12. Batteriepack (200), umfassend eine Mehrzahl von nicht-wässrigen Elektrolytbatterien (21, 100), von denen jede umfasst:
eine positive Elektrode (5);
eine negative Elektrode (3), die das Aktivmaterial gemäß einem der Ansprüche 1 bis 6 umfasst; und
einen nicht-wässrigen Elektrolyt,
wobei die nichtwässrigen Elektrolytbatterien (21, 100) in Reihe, parallel oder mit einer Kombination aus Reihenschaltung und Parallelschaltung geschaltet sind.

13. Fahrzeug, umfassend den Batteriepack (200) gemäß einem der Ansprüche 8 und 10 bis 12.

## Revendications

1. Matériau actif comprenant un oxyde composite de niobium, qui est représenté par la formule générale LiₓM_{(1-y)}Nb_{y}Nb₂O_{(7+δ)}, où M est au moins un élément choisi dans le groupe constitué par Ti et Zr, et x, y et δ satisfont 0 ≤ x ≤ 6, 0 ≤ y ≤ 1 et -1 ≤ δ ≤ 1, respectivement, et l'oxyde composite de niobium comprend des atomes d'azote en une teneur de 0,01 % à 3,02 % en masse.

2. Matériau actif selon la revendication 1, dans lequel l'oxyde composite de niobium comprend les atomes d'azote en une teneur de 0,03 % à 1 % en masse.

3. Matériau actif selon la revendication 1, dans lequel l'oxyde composite de niobium a une structure cristalline monoclinique.

4. Matériau actif selon la revendication 3, dans lequel la structure cristalline monoclinique appartient à un groupe d'espacement C2/m ou P12/m1.

5. Matériau actif selon l'une quelconque des revendications 1 à 4, qui comprend des particules de l'oxyde composite de niobium, et une concentration en atomes d'azote sur la surface de chaque particule d'oxyde composite de niobium est supérieure à une concentration en atomes d'azote à l'intérieur de chaque particule d'oxyde composite de niobium.

6. Matériau actif selon la revendication 5, dans lequel chaque particule de l'oxyde composite de niobium comprend une phase superficielle ayant une profondeur de 20 nm à partir de la surface, et une phase centrale à l'intérieur de la phase superficielle, et
la phase superficielle a une concentration en atomes d'azote qui est supérieure à une concentration en atome d'azote dans la phase centrale.

7. Batterie à électrolyte non aqueux (100) comprenant :
une électrode positive (5) ;
une électrode négative (3) comprenant le matériau actif selon l'une quelconque des revendications 1 à 6 ; et
un électrolyte non aqueux.

8. Châssis de batterie (200) comprenant la batterie à électrolyte non aqueux (21, 100) selon la revendication 7.

9. Module de batterie (23) comprenant des batteries à électrolyte non aqueux (21, 100), dont chacune comprend :
une électrode positive (5) ;
une électrode négative (3) comprenant le matériau actif selon l'une quelconque des revendications 1 à 6 ; et
un électrolyte non aqueux.

10. Châssis de batterie (200) comprenant le module de batterie (23) selon la revendication 9.

11. Châssis de batterie (200) selon la revendication 10, comprenant en outre un circuit protecteur (26) configuré pour détecter une tension de chaque batterie à électrolyte non aqueux (21, 100).

12. Châssis de batterie (200) comprenant une pluralité de batteries à électrolyte non aqueux (21, 100), dont chacune comprend :
une électrode positive (5) ;
une électrode négative (3) comprenant le matériau actif selon l'une quelconque des revendications 1 à 6 ; et
un électrolyte non aqueux,
dans lequel les batteries à électrolyte non aqueux (21, 100) sont reliées en série, en parallèle ou avec une combinaison de connexion en série et de connexion en parallèle.

13. Véhicule comprenant le châssis de batterie (200) selon l'un quelconque des revendications 8 et 10 à 12.
